# FASCICULE DE BREVET EUROPEEN

(11) **EP 2 776 261 B1**
(45) Date de publication et mention de la délivrance du brevet: **25.08.2021**
(21) Numéro de dépôt: 12794421.3
(22) Date de dépôt: 31.10.2012
(51) Int. Cl.: B60J 1/08, B32B 17/10

(54) **VITRAGE DE SIGNALISATION LUMINEUSE POUR VEHICULE**
LICHTSIGNALISIERUNGSVERGLASUNG FÜR EIN FAHRZEUG
LIGHT-SIGNALING GLAZING FOR A VEHICLE

(30) Priorité: 07.11.2011 FR 1160053
(43) Date de publication de la demande: 17.09.2014
(73) Titulaire: SAINT-GOBAIN GLASS FRANCE, 92400 Courbevoie (FR)
(72) Inventeur: MASSAULT, Laeticia, 60280 Magny Les Compiegne (FR); VERRAT-DEBAILLEUL, Adèle, 60150 Villers-sur-coudun (FR); BAUERLE, Pascal, 80700 Roye (FR); MILHE POUTINGON, Sophie, 60300 Senlis (FR)
(74) Mandataire: Saint-Gobain Recherche
(86) Numéro de dépôt international: PCT/FR2012/052524
(87) Numéro de publication internationale: WO 2013/068678

(56) Documents cités:
- EP-A1- 0 985 868
- EP-A1- 1 234 752
- WO-A1-2004/082934
- DE-A1-102008 004 049
- FR-A1- 2 417 819
- FR-A1- 2 948 609
- GB-A- 520 111
- GB-A- 2 325 772
- US-A1- 2006 209 551
- US-A1- 2008 285 274

## Description

La présente invention concerne un vitrage de signalisation lumineuse pour véhicule, de préférence pour véhicule automobile, comportant un système d'éclairage par la tranche du vitrage et des moyens d'opacification empêchant l'émission de la lumière vers l'intérieur du véhicule.

Dans le domaine automobile, il est connu de doubler certains feux de signalisation tels que les feux arrière, feux indicateur de direction, feux stop ou feux de marche arrière, par des sources lumineuses synchronisées avec ces feux de signalisation et de même couleur que ceux-ci. Ces sources lumineuses peuvent être placées au niveau de la carrosserie, sur le rétroviseur latéral (répétiteur de clignotant) ou bien à l'intérieur de l'habitacle, généralement à proximité de la lunette arrière, comme décrit par exemple dans la demande EP 1 234 752. Dans le vitrage décrit dans ce document, des diodes électroluminescentes (LED) sont placées dans un boîtier situé en bordure du vitrage sur la face intérieure de celui-ci. Ces LED sont donc en regard d'une face principale du vitrage et sont visibles à travers une fenêtre laissé dans l'émail d'encadrement.

Un tel doublement d'une partie des feux de signalisation implique une ou plusieurs pièces supplémentaires à gérer dans la chaîne de fabrication et augmente par conséquent les coûts de production. Par ailleurs, ces feux de signalisation additionnels, « rapportés », ne sont pas toujours totalement satisfaisants d'un point de vue esthétique. La présente invention est basée sur l'idée d'incorporer la fonction de signalisation supplémentaire directement dans un ou plusieurs vitrages du véhicule, par exemple dans la lunette arrière ou les vitres latérales fixes avant ou arrière du véhicule.

Une telle incorporation de sources lumineuses supplémentaires, éventuellement clignotantes, au niveau des vitres d'une voiture pose toutefois de sérieux problèmes de sécurité routière. En effet, aucune lumière rouge ne doit être émise vers l'avant du véhicule, ni aucune lumière blanche, à l'exception des feux de marche arrière, vers l'arrière du véhicule.

Par ailleurs, la lumière émise par les feux indicateurs de direction (clignotants et répétiteurs de clignotant) doit être visible uniquement du côté où est situé le feu indicateur de direction en question. Si de la lumière était émise par des vitres vers l'intérieur du véhicule, elle risquerait d'être visible par transparence également à l'extérieur de celui-ci. Le clignotement du répétiteur de clignotant gauche, par exemple, pourrait alors être interprété, dans certaines situations par le conducteur d'un autre véhicule, comme provenant du côté droit, et inversement.

On comprendra également que la perception, par le conducteur, de certains feux de signalisation de sa propre voiture pourrait être très gênante dans certaines situations, notamment pendant la conduite de nuit ou lorsque cette lumière est reflétée sur des vitrages ou autres surfaces réfléchissantes à l'intérieur du véhicule.

Pour être homologués, de tels vitrages de signalisation lumineuse doivent donc comporter des éléments de masquage empêchant la lumière de pénétrer vers l'intérieur de l'habitacle, sans toutefois réduire excessivement ou indésirablement le clair de vitre.

La présente demande propose un vitrage de signalisation lumineuse où ces objectifs techniques et de sécurité ont été atteints grâce à des moyens techniques relativement simples, peu coûteux et très satisfaisants d'un point de vue esthétique.

La présente demande a par conséquent pour objet un vitrage de signalisation lumineuse pour véhicule, comprenant
- une première feuille transparente en verre minéral, avec une première face principale destinée à être dirigée vers l'extérieur du véhicule, une deuxième face principale destinée à être dirigée vers l'intérieur du véhicule, et une tranche,
- une ou plusieurs sources lumineuses, de préférence des diodes électroluminescentes (LED), présentant chacune une face émettrice de lumière en regard de la tranche, la lumière émise par les sources lumineuses étant ainsi guidée dans la première feuille entre la première et la deuxième face principale de celle-ci,
- un moyen d'extraction de la lumière au niveau d'au moins une zone de la première face principale ou de la deuxième face principale de la première feuille ou dans l'épaisseur de la première feuille, et
- une couche opaque formée d'encre ou d'émail, en contact avec le moyen d'extraction de la lumière et/ou avec au moins une des faces principales de la feuille ou d'une des feuilles du vitrage, ladite couche opaque étant située vers l'intérieur du véhicule par rapport au moyen d'extraction et masquant totalement le moyen d'extraction de la lumière de manière à le rendre invisible depuis l'intérieur du véhicule.

Le vitrage de la présente invention peut être un vitrage simple, de préférence en verre trempé, ou un vitrage feuilleté comportant au moins deux feuilles simples collées l'une à l'autre de manière connue au moyen d'un intercalaire de feuilletage. Il est important de noter que, dans la description ci-après du vitrage de la présente invention, le terme « première feuille » désignera toujours la feuille de verre éclairée au niveau de sa tranche par la ou les sources lumineuses, indépendamment de sa position respective par rapport à la deuxième feuille. Autrement dit, la première feuille (feuille « éclairée ») peut être celle en contact avec l'extérieur ou avec l'intérieur du véhicule, et peut être doublée d'une deuxième feuille sur sa face orientée respectivement vers l'intérieur ou vers l'extérieur du véhicule.

Bien entendu, lorsque le vitrage est un vitrage simple, la « première feuille » est l'unique feuille en verre du vitrage.

Lorsque le vitrage de signalisation lumineuse de la présente invention est un vitrage feuilleté, il comporte, en plus de la première feuille, une deuxième feuille transparente, également en verre minéral, avec une première face principale destinée à être dirigée vers l'extérieur du véhicule, et une deuxième face principale destinée à être dirigée vers l'intérieur du véhicule, ladite deuxième feuille étant fixée à la première feuille au moyen d'un intercalaire de feuilletage transparent. Cet intercalaire de feuilletage est en contact adhésif
(a) soit avec la deuxième face principale de la première feuille et la première face principale de la deuxième feuille,
(b) soit avec la première face principale de la première feuille et la deuxième face principale de la deuxième feuille.

Dans la variante (a), la feuille éclairée par sa tranche (première feuille) est la feuille en contact avec l'atmosphère extérieure. Cette variante présente l'avantage d'un bon rendement lumineux du vitrage car la lumière émise vers l'extérieur ne sera aucunement absorbée par l'intercalaire et la deuxième feuille. Elle présente toutefois l'inconvénient que des rayures ou salissures, présentes sur la première face principale de la première feuille (face extérieure du vitrage) seront fortement visibles lorsqu'elles sont éclairées par les LED situées sur la tranche de la première feuille.

C'est la raison pour laquelle la variante (b), correspondant au mode de réalisation où la feuille éclairée est celle qui est en contact avec l'atmosphère de l'habitacle du véhicule, sera généralement préférée par rapport à la variante (a), malgré une réduction potentielle du rendement lumineux.

On utilisera de préférence pour la première feuille un verre minéral sodo-calcique incolore tels que le verre Planilux® commercialisé par la Demanderesse. La première feuille a typiquement une épaisseur comprise entre 2,5 et 6 mm lorsqu'il s'agit d'un vitrage simple, et une épaisseur comprise entre 1,4 et 3,2 mm, de préférence entre 1,4 et 2,1 mm lorsqu'il s'agit d'un vitrage feuilleté.

Lorsque la deuxième feuille est collée sur la face extérieure de la première feuille, elle est de préférence aussi transparente et incolore que la première feuille. Dans un mode de réalisation préféré, un vitrage feuilleté selon l'invention sera constitué de deux feuilles Planilux® incolores, réunies au moyen d'un intercalaire de feuilletage teinté.

Lorsqu'elle est collée sur la face intérieure de la première feuille, la deuxième feuille peut, au contraire, être en verre teinté, par exemple en verre Vénus®, TSA3+ ou TSA4+ également commercialisés par la Demanderesse. Bien que le feuilletage de deux feuilles de teinte différentes pose, pour l'instant, différents inconvénients liés au procédé verrier, ce mode de réalisation pourrait devenir très intéressant lorsque ces problèmes seront surmontés.

La deuxième feuille a typiquement une épaisseur comprise entre 1,4 et 2,1 mm.

L'intercalaire peut être constitué de n'importe quel matériau polymère couramment utilisé pour cette fonction. On peut mentionner à titre d'exemple de tels matériaux le poly(butyral de vinyle) (PVB), le polyuréthanne plastifié et les copolymères d'éthylène et d'acétate de vinyle (EVA), éventuellement partiellement hydrolysés. L'intercalaire a typiquement une épaisseur comprise entre 0,2 et 1,1 mm et peut être incolore ou teinté.

La lumière émise par les sources lumineuses entre par la tranche de la première feuille qui joue un rôle de guide d'onde.

Pour « extraire » la lumière du guide d'onde, il existe de nombreux moyens d'extraction familiers à l'homme du métier et communément utilisés dans le domaine des vitrages. Le moyen d'extraction de la lumière peut être, par exemple, une zone dépolie de la première feuille ou bien un revêtement diffusant appliqué sur l'une des faces principales de la première feuille ou bien sur la face de l'intercalaire de feuilletage en contact avec la première feuille. Il peut également s'agir d'une zone gravée dans l'épaisseur de la première feuille ou encore d'éléments diffusants, tels que des particules ou fibres de verre, incorporés dans l'intercalaire.

On peut utiliser en tant que revêtement diffusant n'importe quel revêtement diffusant couramment utilisé dans le domaine du vitrage. Un tel revêtement comprend généralement des particules ayant une taille de l'ordre du micromètre et un liant, organique ou minéral, permettant de faire adhérer ces particules à la surface du verre. Les particules peuvent être en métal ou en oxyde métallique. Leur taille moyenne est typiquement comprise entre 50 nm et 1 micromètre. Un revêtement diffusant approprié est décrit par exemple dans la demande internationale WO 01/90787.

Dans un mode de réalisation de la présente invention, la couche opaque de masquage est en émail. L'homme du métier est familier avec l'application d'émaux opaques, généralement de couleur noire, au niveau des bords de vitrages automobiles.

Pour la fabrication de deux couches congruentes, l'une de couleur claire (moyen d'extraction de la lumière) et l'autre de couleur plus foncée, voire noire (couche opaque), on pourra se référer à la demande US2006/0150680. La demande EP0636588 décrit la fabrication d'émaux métallisés qui, du fait de leur caractère réfléchissant, peuvent être particulièrement intéressants pour la présente invention.

Dans un autre mode de réalisation du vitrage de la présente invention, la couche opaque de masquage est constituée d'encre. Cette encre n'ayant généralement pas besoin d'être soumise à des températures aussi élevées que l'émail, l'utilisation d'une encre permet des possibilités d'application supplémentaires. En effet, l'encre peut être appliquée par impression, par exemple par sérigraphie, flexographie ou jet d'encre sur l'une des faces principales de la première ou de la deuxième feuille, mais elle peut également être appliquée sur l'une des faces de l'intercalaire de feuilletage qui se trouvera, après assemblage, en contact direct avec l'une des faces principales des feuilles de verre.

Les encres noires pour l'impression de verre sont familières à l'homme du métier. L'impression de l'intercalaire de feuilletage avec des encres noires est décrite par exemple dans la demande française déposée par la Demanderesse le 12 avril 2011 sous le numéro 11 53189.

Différentes configurations pour le moyen d'extraction de la lumière et la couche opaque sont envisageables. Ces deux éléments essentiels pour l'invention peuvent être en contact l'un avec l'autre, ou bien ils peuvent être séparés par exemple par une des feuilles de verre et/ou par l'intercalaire de feuilletage. Dans tous les cas, la couche opaque de masquage est bien entendu située plus vers l'intérieur du véhicule que le moyen d'extraction, faute de quoi elle ne pourrait pas jouer le rôle de barrière ou d'écran à la lumière.

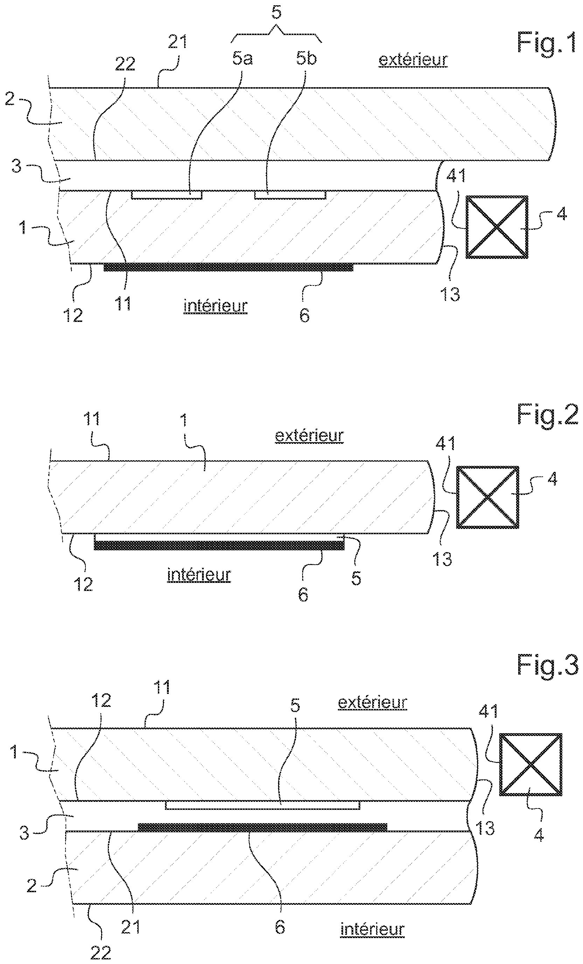

Dans un mode de réalisation du vitrage de la présente invention, représenté à la figure 2, le moyen d'extraction de la lumière est sur la deuxième face principale de la première feuille, et la couche opaque est directement en contact avec le moyen d'extraction de la lumière et le recouvre totalement. La couche opaque peut être de même taille et forme que le moyen d'extraction et se superposer parfaitement à celui-ci, ou bien elle peut être plus grande que ce dernier et dépasser la limite de celui-ci. Dans un mode de réalisation préféré, les deux couches (moyen d'extraction et couche opaque) sont déposées l'une au dessus de l'autre sur la deuxième face principale de la première feuille. On peut toutefois également envisager le dépôt du moyen d'extraction de la lumière sur la deuxième face de la première feuille et le dépôt d'une encre opaque sur l'une des faces d'un éventuel intercalaire de feuilletage qui sera ensuite mis en contact avec la première feuille de manière à ce que ces deux dépôts soient superposés.

Dans un deuxième mode de réalisation du vitrage de la présente invention, représenté à la figure 1, le moyen d'extraction de la lumière est sur la première face principale de la première feuille et la couche opaque est sur la deuxième face principale de la première feuille. Dans ce mode de réalisation où la couche opaque n'est pas directement en contact avec le moyen d'extraction de la lumière, le décalage entre ces deux couches (épaisseur de la première feuille) risque de réduire l'efficacité de masquage de la lumière par la couche opaque. Dans ce mode de réalisation il est par conséquent particulièrement intéressant que l'étendue de la couche opaque soit plus importante que celle du moyen d'extraction et dépasse ce dernier sur tout son pourtour.

Encore un autre mode de réalisation du vitrage de la présente invention, représenté à la figure 3, concerne uniquement les vitrages feuilletés. Dans ce mode de réalisation la feuille éclairée (= première feuille) est la feuille en contact avec l'atmosphère extérieure, c'est-à-dire la deuxième feuille est fixée à la première feuille au moyen de l'intercalaire de feuilletage qui est en contact adhésif avec la deuxième face principale de la première feuille et la première face principale de la deuxième feuille, et le moyen d'extraction de la lumière est sur au moins une des faces principales de la première feuille et la couche opaque sur au moins une des faces principales de la deuxième feuille. Comme pour le mode de réalisation, représenté à la figure 1, il est ici particulièrement intéressant que l'étendue de la couche opaque soit plus importante que celle du moyen d'extraction et dépasse ce dernier sur tout son pourtour.

Enfin, un dernier mode de réalisation intéressant est caractérisé par le fait que la deuxième feuille est fixée à la première feuille au moyen de l'intercalaire de feuilletage qui est en contact adhésif avec la première face principale de la première feuille et la deuxième face principale de la deuxième feuille, et le moyen d'extraction de la lumière est sur la première face principale de la première feuille et la couche opaque sur la deuxième face principale de cette première feuille.

Le moyen d'extraction de la lumière peut prendre la forme d'une zone unique continue, d'une forme quelconque, ou bien il peut être composé de plusieurs zones distinctes. Il en va bien entendu de même de la couche opaque. Lorsque le moyen d'extraction est présent sous forme de plusieurs zones distinctes, la couche opaque peut être une zone unique englobant l'ensemble de ces zones, comme illustré à la figure 1.

Comme expliqué ci-dessus, lorsque la couche opaque n'est pas directement en contact avec le moyen d'extraction, elle a de préférence une étendue plus importante que ce dernier. De manière générale, l'étendue totale de la zone ou des zones couvertes par la couche opaque est supérieure d'au moins 5 %, de préférence d'au moins 10 % et en particulier d'au moins 20 %, à l'étendue totale de la zone ou des zones couvertes par le moyen d'extraction de la lumière.

Par contre, lorsque ces deux couches sont en contact l'une avec l'autre, elles peuvent être congrues (c'est-à-dire de même forme et taille) et superposées l'une à l'autre.

Bien qu'il soit en principe envisageable, dans certains cas, par exemple pour le déflecteur ou la custode (vitrages latéraux fixés sur la carrosserie, respectivement à l'avant et à l'arrière du véhicule), que toute la surface du vitrage soit couverte d'une couche opaque, il est généralement indispensable, notamment pour la lunette arrière et certaines vitres latérales, que le vitrage comporte au moins une zone transparente, appelée « clair de vitre », non couverte par la couche opaque.

Ce clair de vitre représente généralement au moins 20 %, de préférence au moins 50 % et en particulier au moins 70 % de la surface totale du vitrage, y compris les zones couvertes par l'encapsulation ou les joints. Autrement dit, la couche opaque couvre une zone qui représente généralement au plus 80 %, de préférence au plus 50 % et en particulier au plus 30 % de la surface totale du vitrage.

Comme il a été mentionné ci-avant, l'émail et l'encre formant la couche opaque peuvent être à la fois réfléchissants et opaques. Lorsqu'ils ne sont pas réfléchissants et absorbent la plus grande partie de la lumière, il peut être avantageux, pour des raisons évidentes de rendement lumineux, d'interposer entre le moyen d'extraction de la lumière et la couche opaque une couche réfléchissante, de préférence une mince couche métallique.

On entend par « couche opaque » dans la présente demande une couche ayant une densité optique au moins égale à 2. La densité optique de la couche opaque est de préférence comprise entre 2,5 et 5, plus préférentiellement entre 2,8 et 4,5 et en particulier entre 3 et 4.

Lorsque la couche opaque est doublée, sur sa face tournée vers le moyen d'extraction de la lumière, d'une couche réfléchissante, par exemple d'une mince couche métallique, il est suffisant que l'ensemble de ces deux couches présente les densités optiques ci-dessus.

La présente invention a également pour objet un véhicule, de préférence un véhicule automobile, comportant au moins un vitrage de signalisation lumineuse tel que décrit ci-avant.

La fonction que remplira le vitrage de signalisation dépendra alors de sa position dans le véhicule et de la couleur de la lumière émise par le moyen d'extraction de la lumière.

Lorsqu'il est destiné à fonctionner comme un feu indicateur de direction le vitrage selon l'invention émet une lumière de couleur jaune auto (voir Directive du Conseil n° 76/759/CEE du 27 juin 1976, Annexe V). Il est alors situé au niveau de la lunette arrière lorsqu'il s'agit d'un clignotant arrière (catégorie 2), au niveau d'une vitre latérale lorsqu'il s'agit d'un répétiteur de clignotant (catégorie 5), ou au niveau du pare-brise lorsqu'il s'agit d'un feu clignotant avant (catégorie 1).

De façon analogue le vitrage émettra une lumière rouge lorsqu'il fonctionne comme feu arrière ou feux-stop, et une lumière blanche lorsqu'il s'agit par exemple d'un feu de marche arrière. Dans ces deux cas, le vitrage correspond bien entendu à la lunette arrière.

La couleur de la lumière émise par le vitrage, et plus précisément par le moyen d'extraction de la lumière, peut être déterminée, entre autres,
- par le spectre d'émission des sources lumineuses,
- par le spectre d'absorption de la première feuille (guide d'onde de la lumière reçue des sources lumineuses),
- par un intercalaire de feuilletage teinté en contact adhésif avec la première face de la première feuille, ou
- par le spectre d'absorption/d'émission du matériau formant le moyen d'extraction de la lumière.

On peut citer à titre d'exemples de modes de réalisation préférés les suivants :
LED de couleur jaune auto en combinaison avec une première feuille non teintée et un matériau d'extraction blanc ;
LED de couleur jaune auto en combinaison avec une première feuille non teintée et un matériau d'extraction orange ou jaune ;
LED de couleur blanche en combinaison avec une première feuille non teintée et un matériau d'extraction orange ou jaune.

On pourra également envisager l'utilisation de LED émettant un rayonnement UV en combinaison avec un matériau d'extraction de type luminophore fluorescent.

Bien entendu, quelque soit la fonction que jouera le vitrage de signalisation lumineuse de la présente invention, les sources lumineuses devront avoir un système d'alimentation électrique, autonome ou rattaché au système électrique de la voiture. Les sources lumineuses devront par ailleurs être configurées de manière à pouvoir recevoir des signaux de commande régissant leur allumage/extinction.

Dans un mode de réalisation préféré du véhicule de la présente invention, le vitrage de signalisation lumineuse est un feu indicateur de direction, capable d'émettre une lumière jaune auto clignotante. Il s'agit de préférence d'un répétiteur de clignotant (feu indicateur de direction de catégorie 5 ; Directive du Conseil n° 76/759/CEE du 27 juin 1976), situé au niveau des déflecteurs ou des vitres latérales fixes avant.

Pour garantir une puissance lumineuse satisfaisante, comprise entre 0,3 et 200 cd vue depuis un angle compris entre 5 et 55 ° par rapport à l'axe de référence du véhicule (voir directive n° 76/759/CEE), les faces émettrices des sources lumineuses sont de préférence en regard de la tranche de la première feuille positionnée vers l'avant du véhicule.

La présente invention sera décrite maintenant en référence aux figures annexées dans lesquelles
la figure 1 est une représentation schématique en coupe transversale d'un premier mode de réalisation d'un vitrage selon l'invention,
la figure 2 est une représentation schématique en coupe transversale d'un deuxième mode de réalisation d'un vitrage selon l'invention et
la figure 3 est une représentation schématique en coupe transversale d'un troisième mode de réalisation, et
les figures 4a et 4b sont une illustration d'un vitrage latéral avant fixe jouant le rôle de répétiteur de clignotant.

Plus particulièrement, la figure 1 montre le bord d'un vitrage feuilleté, en coupe transversale. Une deuxième feuille 2, en contact *via* sa première surface principale 21 avec l'atmosphère extérieure, est collée par l'intermédiaire d'un intercalaire de feuilletage 3 à une première feuille 1, éclairée par sa tranche 13. L'intercalaire de feuilletage est en contact adhésif avec la deuxième face principale 22 de la deuxième feuille et avec la première face principale 11 de la première feuille. La deuxième face principale 12 de la première feuille 1 est en contact avec l'atmosphère intérieure du véhicule. Une diode électroluminescente (LED) 4 est positionnée à proximité de la tranche 13 de la première feuille 1, sa face émettrice 41 étant en regard de cette tranche. Le moyen d'extraction de la lumière 5 est ici constitué de deux zones 5a, 5b gravées dans la surface de la première face principale 11 de la première feuille 1. La couche opaque 6, un émail appliqué sur la deuxième face principale 12 de la première feuille, a une étendue beaucoup plus importante que les deux zones gravées 5a,5b et couvre une zone qui englobe ces deux zones individuelles.

La figure 2 montre le bord d'un vitrage simple selon l'invention en coupe transversale. Le vitrage comporte une feuille unique 1, appelée première feuille, avec une première face principale 11 en contact avec l'atmosphère extérieure, une deuxième face principale 12 en contact avec l'intérieur du véhicule, et une tranche 13. La face émettrice 41 d'une LED 4 est en regard de la tranche 13. Le moyen d'extraction de la lumière 5 est en contact direct avec la deuxième face principale 12 de la feuille 1. Le moyen d'extraction 5 est couvert, sur toute sa surface, d'une couche opaque 6. Celle-ci a exactement la même forme et taille que le moyen d'extraction de la lumière 5 et se superpose à celui-ci sans toutefois le dépasser.

La figure 3 montre un mode de réalisation où le moyen d'extraction de la lumière 5 et la couche opaque 6 sont sur deux feuilles différentes d'un vitrage feuilleté. Le moyen d'extraction 5 est situé sur la deuxième face principale 12 de la première feuille 1, éclairée par la LED 4. La couche opaque 6 est en contact avec la première face principale 21 de la deuxième feuille 2 et également avec l'intercalaire de feuilletage 3. La couche opaque 6 peut être formée d'un émail ou d'une encre opaque déposés sur la face 21, ou bien peut-être une couche d'encre imprimée sur l'intercalaire de feuilletage 3. Comme pour la figure 1, la séparation dans l'espace du moyen d'extraction de la lumière 5 et de la couche opaque 6 justifie un dimensionnement plus important de la couche opaque 6, par rapport au moyen d'extraction 5.

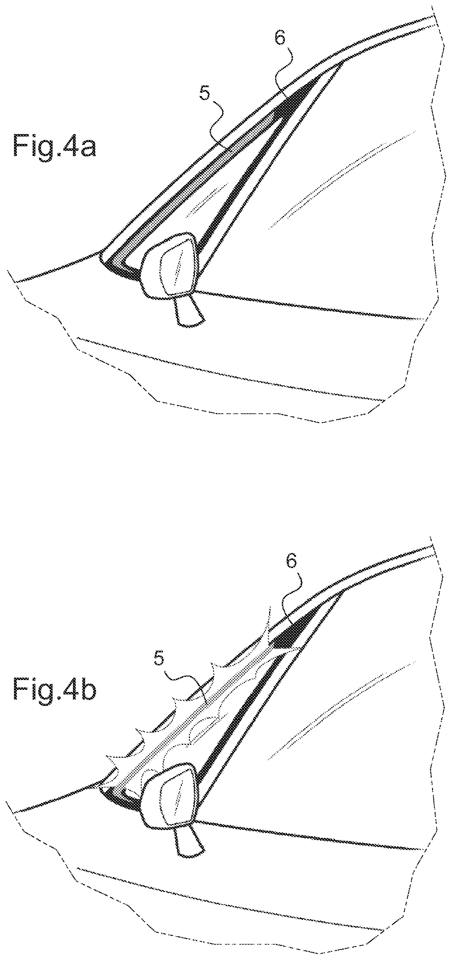

Les figures 4a et 4b illustrent un vitrage de signalisation lumineuse particulier, respectivement à l'état éteint et allumé. Il s'agit d'un répétiteur de clignotant sous forme d'une vitre latérale avant fixe d'un véhicule automobile. Les sources lumineuses, non représentées, se trouvent en regard de la tranche de la vitre, positionnée vers l'avant du véhicule. Le moyen d'extraction de la lumière 5 est une unique zone de forme allongée à proximité des sources lumineuses. Une couche opaque 6, d'une étendue plus importante que le moyen d'extraction, empêche efficacement la lumière diffusée par le moyen d'extraction de pénétrer à l'intérieur du véhicule.

## Revendications

1. Vitrage de signalisation lumineuse pour véhicule, **caractérisé par le fait qu'**il comprend:
- une première feuille (1) transparente en verre minéral, avec une première face principale (11) destinée à être dirigée vers l'extérieur du véhicule, une deuxième face principale (12) destinée à être dirigée vers l'intérieur du véhicule, et une tranche (13),
- une deuxième feuille (2) transparente en verre minéral, avec une première face principale (21) destinée à être dirigée vers l'extérieur du véhicule, et une deuxième face principale (22) destinée à être dirigée vers l'intérieur du véhicule, ladite deuxième feuille (2) étant fixée à la première feuille (1) au moyen d'un intercalaire de feuilletage (3) transparent en contact adhésif
- soit avec la deuxième face principale (12) de la première feuille et la première face principale (21) de la deuxième feuille,
- soit avec la première face principale (11) de la première feuille et la deuxième face principale (22) de la deuxième feuille,
- une ou plusieurs sources lumineuses (4), de préférence des diodes électroluminescentes (LED), présentant chacune une face émettrice de lumière (41) en regard de la tranche (13), la lumière émise par les sources lumineuses étant ainsi guidée dans la première feuille (1) entre la première et la deuxième face principale de celle-ci, et
- un moyen d'extraction de la lumière (5) au niveau d'au moins une zone de la première face principale (11) ou de la deuxième face principale (12) de la première feuille ou dans l'épaisseur de la première feuille (1).
- une couche opaque (6) formée d'encre ou d'émail, ladite couche opaque étant située vers l'intérieur du véhicule par rapport au moyen d'extraction (5), masquant totalement le moyen d'extraction de la lumière (5) de manière à le rendre invisible depuis l'intérieur du véhicule, et couvrant une zone qui représente au plus 80% de la surface totale du vitrage.

2. Vitrage selon la revendication 1, **caractérisé par le fait que** le moyen d'extraction de la lumière (5) est sur la deuxième face principale (12) de la première feuille (1), et la couche opaque (6) est directement en contact avec le moyen d'extraction de la lumière (5) en le recouvrant totalement, de préférence en dépassant la limite de celui-ci.

3. Vitrage selon la revendication 1, **caractérisé par le fait que** le moyen d'extraction de la lumière (5) est sur la première face principale (11) de la première feuille et la couche opaque (6) est sur la deuxième face principale (12) de la première feuille.

4. Vitrage selon la revendication 1, **caractérisé par le fait que** la deuxième feuille (2) est fixée à la première feuille (1) au moyen de l'intercalaire de feuilletage (3) qui est en contact adhésif avec la deuxième face (12) de la première feuille et la première face principale (21) de la deuxième feuille, et que le moyen d'extraction de la lumière (5) est sur au moins une des faces principales (11, 12) de la première feuille (1) et la couche opaque (6) sur au moins une des faces principales (21,22) de la deuxième feuille (2).

5. Vitrage selon la revendication 1, **caractérisé par le fait que** la deuxième feuille (2) est fixée à la première feuille (1) au moyen de l'intercalaire de feuilletage (3) qui est en contact adhésif avec la première face principale (11) de la première feuille et la deuxième face principale (22) de la deuxième feuille, et que le moyen d'extraction de la lumière (5) est sur la première face principale (11) de la première feuille (1) et la couche opaque (6) sur la deuxième face principale (12) de la première feuille (2).

6. Vitrage selon l'une quelconque des revendications précédentes, **caractérisé par le fait que** l'étendue totale de la zone ou des zones couvertes par la couche opaque (6) est supérieure d'au moins 5 %, de préférence d'au moins 10 % et en particulier d'au moins 20 %, à l'étendue totale de la zone ou des zones couvertes par le moyen d'extraction de la lumière (5).

7. Vitrage selon l'une quelconque des revendications 1 à 6, **caractérisé par le fait que** le moyen d'extraction de la lumière (5) et la couche opaque (6) sont congrus et superposés l'un à l'autre.

8. Vitrage selon l'une quelconque des revendications précédentes, **caractérisé par le fait qu'**il comporte en outre une couche réfléchissante, de préférence une couche métallique, située entre le moyen d'extraction de la lumière (5) et la couche opaque (6).

9. Vitrage selon l'une quelconque des revendications précédentes, **caractérisé par le fait que** la couche opaque (6) présente une densité optique comprise entre 2,5 et 5, de préférence entre 2,8 et 4,5 et en particulier entre 3 et 4.

10. Véhicule comportant au moins un vitrage de signalisation lumineuse selon l'une quelconque des revendications précédentes.

11. Véhicule selon la revendication précédente, **caractérisé par le fait que** vitrage de signalisation lumineuse est un feu indicateur de direction.

12. Véhicule selon la revendication précédente, **caractérisé par le fait que** le vitrage de signalisation lumineuse est un répétiteur de clignotant.

13. Véhicule selon la revendication précédente, **caractérisé par le fait que** les faces émettrices (41) des sources lumineuses (4) sont en regard de la tranche (13) de la première feuille positionnée vers l'avant du véhicule.

## Patentansprüche

1. Lichtsignalisierungsverglasung für ein Fahrzeug, **dadurch gekennzeichnet, dass** sie Folgendes umfasst:
- eine erste transparente Scheibe (1) aus Mineralglas mit einer ersten Hauptseite (11), die dazu bestimmt ist, zur Außenseite des Fahrzeugs gerichtet zu werden, einer zweiten Hauptseite (12), die dazu bestimmt ist, zur Innenseite des Fahrzeugs gerichtet zu werden, und eine Kante (13),
- eine zweite transparente Scheibe (2) aus Mineralglas mit einer ersten Hauptseite (21), die dazu bestimmt ist, zur Außenseite des Fahrzeugs gerichtet zu werden, einer zweiten Hauptseite (22), die dazu bestimmt ist, zur Innenseite des Fahrzeugs gerichtet zu werden, wobei die wobei die zweite Scheibe (2) an der ersten Scheibe (1) mittels einer transparenten Verbundzwischenschicht (3) in Haftkontakt befestigt ist
- entweder mit der zweiten Hauptseite (12) der ersten Scheibe und der ersten Hauptseite (21) der zweiten Scheibe,
- oder mit der ersten Hauptseite (11) der ersten Scheibe und der zweiten Hauptseite (22) der zweiten Scheibe,
- eine oder mehrere Lichtquellen (4), vorzugsweise Leuchtdioden (LEDs), die jeweils eine der Kante (13) zugewandte lichtemittierende Seite (41) aufweisen, wobei das von den Lichtquellen emittierte Licht in die erste Scheibe (1) zwischen deren erster und zweiter Hauptseite geleitet wird, und
- ein Lichtextraktionsmittel (5) an mindestens einem Bereich der ersten Hauptseite (11) oder der zweiten Hauptseite (12) der ersten Scheibe oder in der Dicke der ersten Scheibe (1),
- eine aus Farbe oder Emaille gebildete opake Schicht (6), wobei die opake Schicht in Bezug auf das Lichtextraktionsmittel (5) zur Innenseite des Fahrzeugs hin angeordnet ist, die das Lichtextraktionsmittel (5) vollständig verdeckt, so dass es von der Innenseite des Fahrzeugs aus nicht sichtbar ist, und einen Bereich bedeckt, der höchstens 80 % der Gesamtoberfläche der Verglasung ausmacht.

2. Verglasung nach Anspruch 1, **dadurch gekennzeichnet, dass** sich das Lichtextraktionsmittel (5) auf der zweiten Hauptseite (12) der ersten Scheibe (1) befindet und die opake Schicht (6) in direktem Kontakt mit dem Lichtextraktionsmittel (5) ist und es dabei vollständig abdeckt, vorzugsweise dessen Grenze überschreitet.

3. Verglasung nach Anspruch 1, **dadurch gekennzeichnet, dass** das Lichtextraktionsmittel (5) sich auf der ersten Hauptseite (11) der ersten Scheibe befindet und die opake Schicht (6) sich auf der zweiten Hauptseite (12) der ersten Scheibe befindet.

4. Verglasung nach Anspruch 1, **dadurch gekennzeichnet, dass** die zweite Scheibe (2) an der ersten Scheibe (1) mittels der Verbundzwischenschicht (3) befestigt ist, die mit der zweiten Seite (12) der ersten Scheibe und der ersten Hauptseite (21) der zweiten Scheibe in Haftkontakt ist, und dass das Lichtextraktionsmittel (5) sich auf mindestens einer der Hauptseiten (11, 12) der ersten Scheibe (1) befindet und die opake Schicht (6) sich auf mindestens einer der Hauptseiten (21,22) der zweiten Scheibe (2) befindet.

5. Verglasung nach Anspruch 1, **dadurch gekennzeichnet, dass** die zweite Scheibe (2) an der ersten Scheibe (1) mittels der Verbundzwischenschicht (3) befestigt ist, die mit der ersten Hauptseite (11) der ersten Scheibe und der zweiten Hauptseite (22) der zweiten Scheibe in Haftkontakt ist, und dass das Lichtextraktionsmittel (5) sich auf der ersten Hauptseite (11) der ersten Scheibe (1) befindet und die opake Schicht (6) sich auf der zweiten Hauptseite (12) der ersten Scheibe (2) befindet.

6. Verglasung nach einem der vorstehenden Ansprüche, **dadurch gekennzeichnet, dass** die Gesamterstreckung des Bereiches oder der Bereiche, die von der opaken Schicht (6) bedeckt sind, um mindestens 5 %, vorzugsweise um mindestens 10 % und insbesondere um mindestens 20 % größer ist als die Gesamterstreckung des Bereiches oder der Bereiche, die von dem Lichtextraktionsmittel (5) bedeckt sind.

7. Verglasung nach einem der Ansprüche 1 bis 6, **dadurch gekennzeichnet, dass** das Lichtextraktionsmittel (5) und die opake Schicht (6) deckungsgleich sind und übereinander liegen.

8. Verglasung nach einem der vorstehenden Ansprüche, **dadurch gekennzeichnet, dass** sie ferner eine reflektierende Schicht, vorzugsweise eine Metallschicht, umfasst, die sich zwischen dem Lichtextraktionsmittel (5) und der opaken Schicht (6) befindet.

9. Verglasung nach einem der vorstehenden Ansprüche, **dadurch gekennzeichnet, dass** die opake Schicht (6) eine optische Dichte zwischen 2,5 und 5, vorzugsweise zwischen 2,8 und 4,5 und insbesondere zwischen 3 und 4 aufweist.

10. Fahrzeug, aufweisend mindestens eine Lichtsignalisierungsverglasung nach einem der vorstehenden Ansprüche.

11. Fahrzeug nach dem vorstehenden Anspruch, **dadurch gekennzeichnet, dass** die Lichtsignalisierungsverglasung ein Blinklicht ist.

12. Fahrzeug nach dem vorstehenden Anspruch, **dadurch gekennzeichnet, dass** die Lichtsignalisierungsverglasung ein Warnblinklicht ist.

13. Fahrzeug nach dem vorstehendem Anspruch, **dadurch gekennzeichnet, dass** die emittierenden Seiten (41) der Lichtquellen (4) der Kante (13) der ersten Scheibe zugewandt sind, die zum vorderen Teil des Fahrzeugs positioniert ist.

## Claims

1. An illuminated signaling glazing unit for a vehicle, **characterized in that** it comprises
- a first transparent sheet (1) made of mineral glass, with a first main face (11) intended to be directed toward the outside of the vehicle, a second main face (12) intended to be directed toward the inside of the vehicle, and an edge face (13),
- a second transparent sheet (2) made of mineral glass, with a first main face (21) intended to be directed toward the outside of the vehicle, and a second main face (22) intended to be directed toward the inside of the vehicle, said second sheet (2) being fixed to the first sheet (1) by means of a transparent interlayer (3) in adhesive contact
- either with the second main face (12) of the first sheet and the first main face (21) of the second sheet,
- or with the first main face (11) of the first sheet and the second main face (22) of the second sheet; one or more light sources (4), preferably light-emitting diodes (LED), each having a light-emission face (41) opposite the edge face (13), the light emitted by the light sources thus being guided into the first sheet (1) between the first and the second main face of the latter, and
- a means for extraction of the light (5) in at least one region of the first main face (11) or of the second main face (12) of the first sheet or within the thickness of the first sheet (1),
- an opaque layer (6) formed from ink or from enamel, said opaque layer being situated toward the inside of the vehicle with respect to the extraction means (5) and totally masking the means for extraction of the light (5) in such a manner as to render it invisible from the inside of the vehicle, and covering a region which represents at the most 80 % of the total surface area of the glazing unit.

2. The glazing unit as claimed in claim 1, **characterized in that** the means for extraction of the light (5) is on the second main face (12) of the first sheet (1), and the opaque layer (6) is directly in contact with the means for extraction of the light (5) completely covering it, preferably overlapping the limits of the latter.

3. The glazing unit as claimed in claim 1, **characterized in that** the means for extraction of the light (5) is on the first main face (11) of the first sheet and the opaque layer (6) is on the second main face (12) of the first sheet.

4. The glazing unit as claimed in claim 1, **characterized in that** the second sheet (2) is fixed to the first sheet (1) by means of the interlayer (3) which is in adhesive contact with the second face (12) of the first sheet and the first main face (21) of the second sheet, and that the means for extraction of the light (5) is on at least one of the main faces (11, 12) of the first sheet (1) and the opaque layer (6) is on at least one of the main faces (21, 22) of the second sheet (2).

5. The glazing unit as claimed in claim 1, **characterized in that** the second sheet (2) is fixed to the first sheet (1) by means of the interlayer (3) which is in adhesive contact with the first main face (11) of the first sheet and the second main face (22) of the second sheet, and that the means for extraction of the light (5) is on the first main face (11) of the first sheet (1) and the opaque layer (6) is on the second main face (12) of the first sheet (2).

6. The glazing unit as claimed in any one of the preceding claims, **characterized in that** the total extent of the region or of the regions covered by the opaque layer (6) is greater by at least 5 %, preferably by at least 10 % and, in particular, by at least 20 %, than the total extent of the region or of the regions covered by the means for extraction of the light (5).

7. The glazing unit as claimed in any one of claims 1 to 7, **characterized in that** the means for extraction of the light (5) and the opaque layer (6) are congruent and superposed one on top of the other.

8. The glazing unit as claimed in any one of the preceding claims, **characterized in that** it furthermore comprises a reflecting layer, preferably a metal layer, situated between the means for extraction of the light (5) and the opaque layer (6).

9. The glazing unit as claimed in any one of the preceding claims, **characterized in that** the opaque layer (6) has an optical density in the range between 2.5 and 5, preferably between 2.8 and 4.5 and, in particular, between 3 and 4.

10. A vehicle comprising at least one illuminated signaling glazing unit as claimed in any one of the preceding claims.

11. The vehicle as claimed in the preceding claim, **characterized in that** the illuminated signaling glazing unit is a direction indicator light.

12. The vehicle as claimed in the preceding claim, **characterized in that** the illuminated signaling glazing unit is an indicator light flasher.

13. The vehicle as claimed in the preceding claim, **characterized in that** the emission faces (41) of the light sources (4) are opposite the edge face (13) of the first sheet positioned toward the front of the vehicle.
